# DEMANDE DE BREVET EUROPEEN

(11) **EP 3 246 726 A1**
(43) Date de publication de la demande: **22.11.2017**
(21) Numéro de dépôt: 17171473.6
(22) Date de dépôt: 17.05.2017
(51) Int. Cl.: G01S 7/292, G01S 13/524, G01S 7/41

(54) **PROCEDE D'OPTIMISATION DE LA DETECTION DE CIBLES MARINE ET RADAR METTANT EN OEUVRE UN TEL PROCEDE**

(30) Priorité: 20.05.2016 FR 1600811
(71) Demandeur: THALES, 92400 Courbevoie (FR)
(72) Inventeur: CORRETJA, Vincent, 33608 PESSAC cedex (FR); GUERRINI, Gilles, 33608 PESSAC cedex (FR); SFEZ, Thierry, 78851 ELANCOURT cedex (FR); MONTIGNY, Richard, 33608 PESSAC cedex (FR); CHABROUX, Jean-Marc, 78851 ELANCOURT cedex (FR)
(74) Mandataire: Lucas, Laurent Jacques

(57) **Abrégé**

La détection étant réalisée pour une mission donnée, procédé comporte :
- Une phase (21) d'analyse de l'environnement à l'aide d'une forme d'onde (212) préalablement choisie, les signaux acquis avec cette forme d'onde étant analysés par des moyens de traitement (213) pour en déduire des caractéristiques d'environnement (222) ;
- Une phase (22) d'élaboration d'un traitement de détection (221) optimal en fonction desdites caractéristiques d'environnement et des caractéristiques de ladite mission.

## Description

La présente invention concerne un procédé d'optimisation de la détection de cibles marines par un radar aéroporté. Elle concerne également un radar mettant en oeuvre un tel procédé.

Actuellement sur les radars de surveillance aéroportés, le choix du traitement de détection utilisé est plutôt réalisé manuellement pour un opérateur, ce choix étant réalisé parmi plusieurs traitements prédéfinis disponibles dans le radar.
Les inconvénients de cette solution sont notamment les suivants :
- L'opérateur passe beaucoup de temps pour analyser la situation opérationnelle (type de cible à traiter, environnement de la mer, conditions météorologiques, ...) et pour choisir le traitement de détection adapté. De ce fait, l'expérience montre que l'opérateur utilise parfois un unique traitement sans le changer durant toute la durée de la mission. De plus, si le besoin opérationnel est multiple, nécessitant par exemple la détection et l'identification, l'opérateur doit réaliser de nombreuses manipulations pendant la mission de surveillance. Cela a notamment pour effet d'augmenter son stress et diminuer sa concentration ;
- L'opérateur doit, pour faire ce choix à bon escient, avoir été formé d'une part, et disposer d'une expérience non négligeable d'autre part ;
- Le traitement de détection étant choisi parmi un nombre limité de traitement déjà prédéfinis, typiquement entre trois et cinq pour les traitements de détection air/mer, même le meilleur choix de l'opérateur n'assure pas que le traitement sélectionné soit parfaitement adapté à la cible à traiter et à l'environnement au moment de la mission ;
- Le choix du traitement étant réalisé par l'opérateur en fonction de sa propre perception et évaluation de l'environnement, souvent enrichie par la connaissance d'informations météorologiques, cette évaluation peut toutefois être limitée en précision et ne pas correspondre à celle perçue par le radar.

Un but de l'invention est notamment de surmonter les inconvénients précités. A cet effet, l'invention a pour objet un procédé d'optimisation de la détection de cibles marines effectuée par un radar aéroporté, la détection étant réalisée pour une mission donnée, ledit procédé comportant au moins :
- Une phase d'analyse de l'environnement à l'aide d'une forme d'onde préalablement choisie, les signaux acquis avec cette forme d'onde étant analysés par des moyens de traitement pour en déduire des caractéristiques d'environnement ;
- Une phase d'élaboration d'un traitement de détection optimal en fonction desdites caractéristiques d'environnement et des caractéristiques de ladite mission ;
le traitement de détection étant élaboré à partir d'un ensemble modules de traitements disponibles et mémorisés, ledit traitement de détection étant formé à partir d'un traitement générique activant certains desdits modules en fonction desdites caractéristiques d'environnement et des caractéristiques de ladite mission.

Lesdites caractéristiques d'environnement comportent par exemple les caractéristiques du fouillis de mer, ces dernières appartenant par exemple à la liste suivante :
- Niveau de puissance du fouillis ;
- Distribution statistique du fouillis ;
- Spectre du fouillis ;
- Présence de pointes de fouillis (et caractéristiques de ces pointes).

Les caractéristiques de ladite mission comportent les caractéristiques du type de cibles à détecter, ces dernières étant par exemple comprises dans la liste suivante :
- Longueur des cibles ;
- SER des cibles ;
- Forme des cibles ;
- Vitesse des cibles.

Les caractéristiques de ladite mission comportent par exemple le domaine distance sur lequel on cherche à détecter les cibles.

Les modules de traitement appartiennent par exemple à la liste des traitements suivante :
- Traitement cohérent ;
- Traitement incohérent ;
- Pistage avant détection ;
- Intégration tour à tour.

Le traitement de détection est par exemple fonction de paramètres de détection appartenant à la liste suivante :
- Temps d'éclairement d'une cible ;
- Nombre de récurrences radar post-intégrées ;
- Type de mesure de contraste.

Ladite mission est par exemple une mission de patrouille maritime ou de surveillance maritime, notamment de sauvetage en mer.

L'invention a également pour objet un radar mettant en oeuvre le procédé précédemment décrit.

D'autres caractéristiques et avantages de l'invention apparaîtront à l'aide de la description qui suit faite en regard de dessins annexés qui représentent :
- La figure 1, un état de l'art antérieur ;
- La figure 2, une illustration du procédé selon l'invention ;
- La figure 3, le principe de fonctionnement d'un radar selon l'invention.

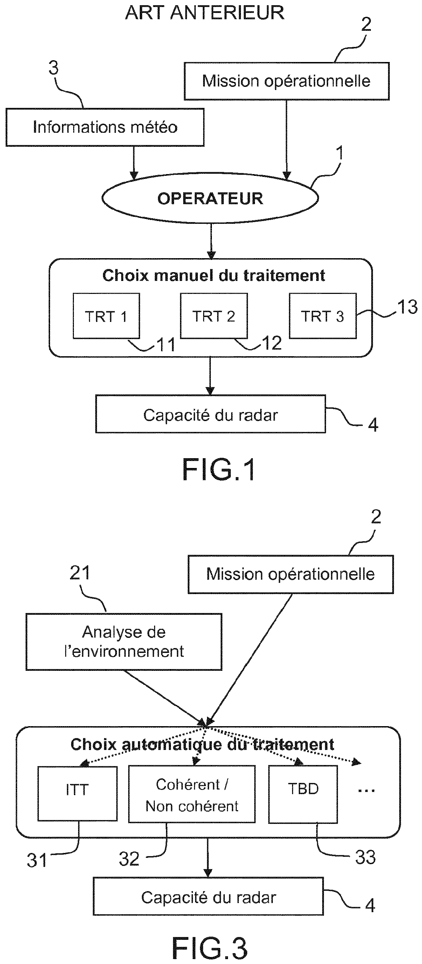

La figure 1 illustre comment est sélectionné le traitement de détection dans une solution selon l'art antérieur. Un opérateur 1, effectue manuellement le choix d'un traitement parmi plusieurs traitements 11, 12, 13 préétablis et disponibles. Ce choix est conduit en fonction de la mission opérationnelle ou du besoin opérationnel 2 et de l'environnement, en particulier les informations météorologiques 3. En fonction de ces critères, le choix est fixé avec pour objectif d'optimiser les capacités de détection du radar. Les inconvénients de cette solution ont été exposés précédemment.

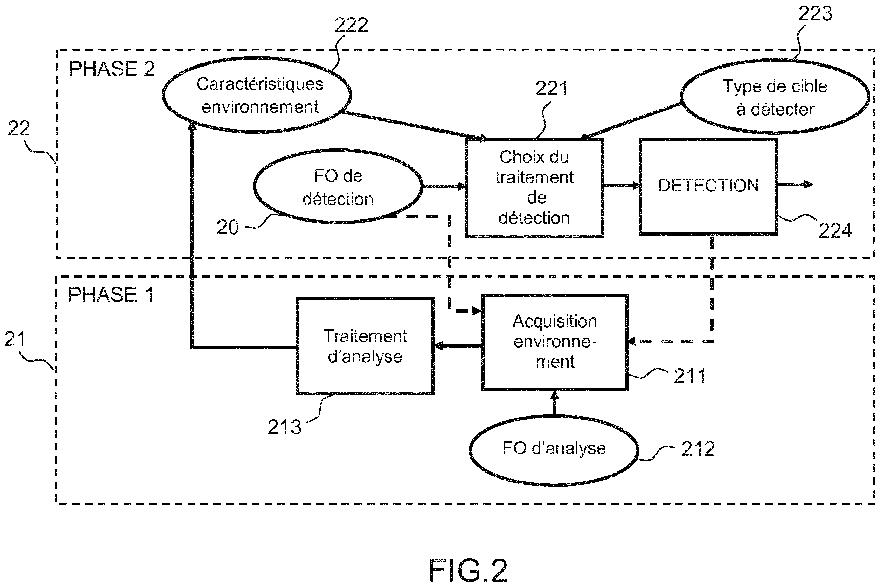

La figure 2 illustre les phases de mise en oeuvre possibles d'un procédé selon l'invention. Par l'invention, le radar est capable d'évaluer son environnement afin de l'analyser et d'en déduire, en fonction du type de cible à détecter (donnée par une consigne d'opérateur en mission par exemple), le traitement de détection le plus adapté à la mission. En d'autres termes, ce traitement de détection est celui qui assure la performance de détection maximale. A cette fin, le procédé selon l'invention comporte au moins deux phases.
Dans une première phase 21, une analyse de l'environnement est effectuée puis dans une deuxième phase 22, une fois l'environnement connu, on adapte de manière automatique le traitement de détection en fonction des besoins opérationnels et de la connaissance de l'environnement. La mission 2 est par exemple effectuée dans le cadre d'une mission de sauvetage en mer. Un radar aéroporté mettant en oeuvre le procédé a alors pour mission de détecter la ou les cibles marines à secourir.
Le procédé permet de doter un radar le mettant en oeuvre d'une capacité d'optimiser lui-même et automatiquement le choix du traitement de détection grâce à une analyse temps réel de l'environnement, effectué dans la première phase 21, et la connaissance du besoin opérationnel défini par la mission 22.
Dans cette première phase 21, le radar effectue l'acquisition 211 des données d'environnement à l'aide d'une forme d'onde 212, dite forme d'onde d'analyse, choisie au préalable, cette forme d'onde étant conçue pour l'analyse de l'environnement.
Ensuite, les signaux acquis avec cette forme d'onde sont analysés par un traitement 213, dit traitement d'analyse.
Dans une deuxième phase 22, le radar élabore automatiquement le traitement 221 dit de détection en fonction du résultat 222 de son analyse et de la connaissance du type de cible 223 à détecter, fourni par la mission 21. Le choix du traitement de détection se réalise en fonction :
- de la mission opérationnelle ;
- de la connaissance du fouillis de mer.
De manière plus générale, un arbre de décision est établi prenant en compte tous les paramètres du mode de détection à optimiser (traitement cohérent ou non, temps d'éclairement, nombre de récurrences de post-intégration, type de mesure de contraste utilisation ou non d'une intégration tour à tour, etc ...).
Les entrées de cet arbre de décision sont par exemple la longueur, la SER, la vitesse et la structure du type de cible que l'on cherche à détecter ainsi que le niveau de réflectivité et la statistique de la puissance du fouillis de mer.
Un arbre de décision est une manière connue pour résoudre ce type de problème, mais d'autres techniques existent comme l'utilisation d'un système expert par exemple.
Une fois la détection d'une cible réalisée, on peut recommencer le cycle d'analyse et de détection, c'est-à-dire le déroulement des deux phases 21, 22, pour un autre type de cible.
Si la phase de détection dure un certain temps, on peut envisager de repasser par la phase d'analyse 21 pour remettre à jour le choix du traitement de détection en fonction de l'environnement. Dans ces conditions, le traitement de détection en cours peut également permettre l'extraction des informations de l'environnement. En d'autres termes, la phase d'analyse 21 est réalisée parallèlement à la phase de détection 22. On définit par exemple une durée limite de la phase de détection à l'issue de laquelle on enclenche une nouvelle phase d'analyse 21 de l'environnement.

Dans la phase d'analyse 21, le but du traitement d'analyse est notamment de déterminer les caractéristiques d'environnement 222. Ces dernières sont les caractéristiques principales du fouillis de mer en cas de patrouille maritime. Ces caractéristiques sont les suivantes :
- La direction du vent, obtenue par exemple par une analyse de la puissance rétrodiffusée, cette direction étant déterminée en détectant la direction où la puissance du signal rétrodiffusé par la mer est maximale sur un tour d'antenne ;
- Le niveau de réflectivité du fouillis, obtenu de façon connue par une analyse radiométrique ;
- La distribution statistique de la puissance de fouillis reçue, obtenue par une analyse statistique de la puissance rétrodiffusée ;
- La position et l'étalement spectral du fouillis, obtenus par une analyse spectrale ;
- La présence ou non de pics de fouillis, appelés encore « spikes » ainsi que leurs caractéristiques.

Le type de traitement d'analyse 213 est choisi pour permettre la mesure de ces caractéristiques. En particulier :
- Le traitement radar est cohérent, en effet l'analyse de la position du fouillis ainsi que son étalement spectral ne peuvent être analysés qu'à partir d'un traitement cohérent ;
- Le temps d'éclairement des cibles doit être adapté en fonction du radar utilisé, par exemple pour un radar à balayage mécanique, la vitesse de balayage du mode utilisé doit être relativement faible de manière à pouvoir réaliser une intégration cohérente sur un nombre de récurrences suffisamment grand tout en s'assurant que le signal rétrodiffusé par la mer est stationnaire, de sorte que les paramètres spectraux n'évoluent pas pendant l'analyse ;
- Le nombre de récurrences à post-intégrer doit être suffisamment important afin de minimiser l'influence du bruit thermique dans l'analyse ;
- La mesure de l'environnement peut se faire sur plusieurs types de masques de diverses tailles afin de mesurer l'homogénéité et l'hétérogénéité du fouillis et en déduire la distribution statistique de ce dernier ;
- L'intégration tour à tour (ITT) doit être réalisée avec différents critères afin d'estimer la densité de « spikes » ainsi que leurs durées de vie.

En environnement maritime, la direction du vent influe sur l'analyse de la puissance et sur l'analyse de la statistique de la puissance. Plus particulièrement :
- En ce qui concerne l'analyse de la puissance, la puissance est plus forte lorsque le faisceau d'antenne du radar est « face au vent » que lorsqu'il est en « vent de derrière » ou « vent de travers » ;
- Pour l'analyse de la statistique de la puissance, le fouillis est plus impulsif « face au vent » que « vent de derrière » ou « vent de travers », l'impulsivité se traduisant par une distribution à « queue lourde ».

Enfin, le temps d'acquisition du fouillis avec la forme d'onde d'analyse doit rester court, compatible avec les besoins de la mission, par exemple quelques secondes.

En ce qui concerne la sélection du traitement de détection 221, cette sélection est réalisée en fonction du besoin opérationnel de la mission 2, précisant le type de cible à détecter 223, et de la connaissance des caractéristiques d'environnement 222, c'est-à-dire du fouillis de mer.

Le choix du traitement de sélection est réalisé en déterminant notamment :
- Le traitement cohérent ou non cohérent ;
- Le temps d'éclairement de la cible ;
- Le nombre de récurrences post-intégrées ;
- Le type de mesure du contraste ;
- L'utilisation ou non d'une intégration tour à tour (ITT) ;
- L'utilisation ou non d'un algorithme de pistage avant détection encore appelé « track-before-detect » (TBD) ;
en fonction de la mission opérationnelle 2 et plus précisément :
- La longueur du type de cibles que l'on cherche à détecter ;
- La surface équivalente radar (SER) du type de cible que l'on cherche à détecter ;
- La vitesse du type de cibles que l'on cherche à détecter ;
- La structure du type de cibles que l'on cherche à détecter ;
- Le domaine distance sur lequel on cherche à détecter les cibles ;
en fonction de la connaissance du fouillis :
- Le niveau de réflectivité du fouillis ;
- La distribution statistique de la puissance de fouillis reçue ;
- La position et l'étalement spectral du fouillis ;
- La présence ou non de « spikes ».

Le tableau ci-dessous résume les dépendances possibles entre les paramètres de la forme d'onde 20 résultant de tous ces critères, utilisée pour le traitement de détection, et les caractéristiques de la mission opérationnelle et la connaissance du fouillis. Les paramètres de traitement englobent les modules de traitement et les paramètres de détection exposés précédemment.

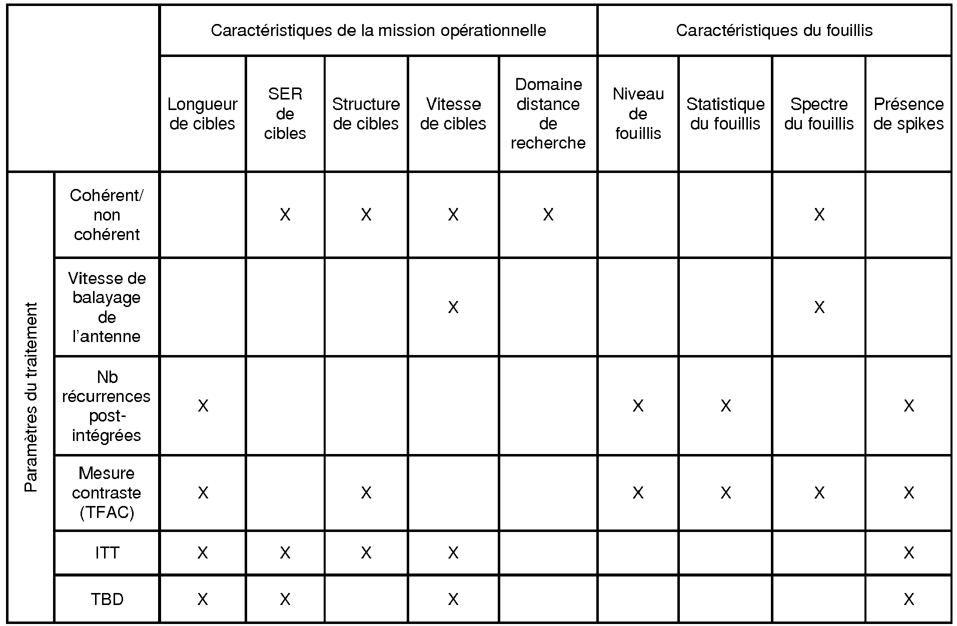

Une fois la forme d'onde de détection 20 établie et le traitement 221 sélectionné, la détection 224 peut être effectuée.

La figure 3 illustre le principe de fonctionnement d'un radar mettant en oeuvre le procédé selon l'invention. L'opérateur n'intervient plus pour sélectionner le traitement de détection, le choix étant réalisé automatiquement.
Le radar analyse 21 en temps réel son environnement sur tout son domaine de détection, puis en fonction du résultat de son analyse 213 et de la mission opérationnelle 2, définit automatiquement le traitement de détection 221 maximisant la probabilité de détection pour chaque zone de son domaine de détection. A cet effet, un mode générique est développé et il est paramétré en fonction du besoin opérationnel. Ainsi, chaque mission peut avoir son traitement de détection propre. Le radar n'a donc plus à sa disposition un nombre limité de traitements de détection mais au contraire un seul mode générique qui définit une panoplie quasi-illimitée de traitements possibles. L'objectif n'est plus d'avoir un nombre fini de traitements mais de disposer d'une multitude de traitements de détections possibles dont les éléments dimensionnant sont paramétrables. Pour cela, l'environnement est caractérisé par un traitement spécifique d'analyse comme cela a été décrit précédemment. Puis en fonction des différentes informations fournies par cette analyse et de la mission à réaliser, le traitement de détection est choisi de manière optimale en sélectionnant et paramétrant automatiquement l'une des briques algorithmiques suivantes :
- Traitement cohérent ou non cohérent 32 ;
- Intégration tout à tour (ITT) 31 ;
- « track-before-detect » (TBD) 33 ;
- etc ;
avec notamment, et non exclusivement, les paramètres de détection suivants :
- Temps d'éclairement de la cible ou vitesse de balayage de l'antenne ;
- Nombre de récurrences post-intégrés ;
- Type de mesure de contraste ;
- etc.
Ces briques algorithmiques sont des modules de traitement existant, mémorisés et accessibles aux moyens de traitement du radar. Le mode de traitement générique, élaboré selon une architecture générique de traitement, fait appel à certains modules en fonction des résultats d'analyse, l'ensemble des modules appelés par le traitement générique formant le traitement de détection 221.
Les modules de traitements, disponibles et mémorisés, sont sélectionnés en fonction des caractéristiques d'environnement et du type de cibles à détecter, le type de cibles détermine les paramètres de détection à prendre en compte, par exemple le temps d'éclairement ou le nombre de post-intégrations.

Ces éléments forment les paramètres de traitement du tableau précédent donné à titre d'exemple. Le choix du traitement est ensuite effectué en fonction des caractéristiques de la mission et des caractéristiques du fouillis tenant compte notamment des liens de dépendance résumés dans le tableau.
Par exemple, si le besoin opérationnel est de détecter des petites cibles non permanentes à courte distance, le radar analyse la mission et détermine les paramètres du mode de détection, le choix étant défini ainsi :
- Le traitement est non cohérent ;
- La vitesse de balayage de l'antenne est rapide afin d'effectuer plusieurs passages sur la cible en un temps limité ;
- Le nombre de post-intégrations est limité en raison de la vitesse de balayage rapide ;
- Une ITT est intégrée au traitement dont le critère dépend du type de cibles ;
- Un algorithme TBD (« Track Before to Detect ») est intégré au traitement car la SER des cibles que l'on cherche à détecter est faible.

L'invention permet avantageusement de maximiser la probabilité de réussite d'une mission opérationnelle en utilisant les informations connues *a priori* de cette mission afin d'optimiser le traitement de détection utilisé pour remplir cette mission. Une telle mission est la détection de cibles marines, par exemple pour des opérations de sauvetage en mer.
Les principaux avantages de l'invention sont notamment les suivants :
- Auto-adaptation et personnalisation du traitement de détection radar afin d'optimiser les capacités 4 du radar ;
- Banalisation et simplification de la formation des opérateurs ;
- Diminution du niveau d'expertise requis des opérateurs ;
- Réduction de la quantité de stress et de travail des opérateurs durant leurs missions afin qu'ils puissent se concentrer sur celles-ci grâce à un moindre effort porté sur l'utilisation du radar.

## Revendications

1. Procédé d'optimisation de la détection de cibles marines effectuée par un radar aéroporté, **caractérisé en ce que** la détection étant réalisée pour une mission donnée, ledit procédé comporte au moins :
- Une phase (21) d'analyse de l'environnement à l'aide d'une forme d'onde (212) préalablement choisie, les signaux acquis avec cette forme d'onde étant analysés par des moyens de traitement (213) pour en déduire des caractéristiques d'environnement (222) ;
- Une phase (22) d'élaboration d'un traitement de détection (221) en fonction desdites caractéristiques d'environnement et des caractéristiques de ladite mission (2) ;
ledit traitement de détection (221) étant élaboré à partir d'un ensemble modules de traitements disponibles et mémorisés, ledit traitement de détection étant formé à partir d'un traitement générique activant certains desdits modules en fonction desdites caractéristiques d'environnement (222) et des caractéristiques de ladite mission (2), que les caractéristiques de ladite mission (2) comportant les caractéristiques du type de cibles à détecter.

2. Procédé selon l'une quelconque des revendications précédentes, **caractérisé en ce que** lesdites caractéristiques d'environnement (222) comportent les caractéristiques du fouillis de mer.

3. Procédé selon la revendication 2, **caractérisé en ce que** lesdites caractéristiques du fouillis de mer appartiennent à la liste suivante :
- Niveau de puissance du fouillis ;
- Distribution statistique du fouillis ;
- Spectre du fouillis ;
- Présence de pointes de fouillis (et caractéristiques de ces pointes).

4. Procédé selon l'une quelconque des revendications précédentes, **caractérisé en ce que** les caractéristiques du type de cibles à détecter sont comprises dans la liste suivante :
- Longueur des cibles ;
- SER des cibles ;
- Forme des cibles ;
- Vitesse des cibles.

5. Procédé selon l'une quelconque des revendications précédentes, **caractérisé en ce que** les caractéristiques de ladite mission (2) comportent le domaine distance sur lequel on cherche à détecter les cibles.

6. Procédé selon l'une quelconque des revendications précédentes, **caractérisé en ce que** les modules de traitement appartiennent à la liste des traitements suivante :
- Traitement cohérent ;
- Traitement incohérent ;
- Pistage avant détection ;
- Intégration tour à tour.

7. Procédé selon l'une quelconque des revendications précédentes, **caractérisé en ce que** le traitement de détection (221) est fonction de paramètres de détection appartenant à la liste suivante :
- Temps d'éclairement d'une cible ;
- Nombre de récurrences radar post-intégrées ;
- Type de mesure de contraste.

8. Procédé selon l'une quelconque des revendications précédentes, **caractérisé en ce que** ladite mission (2) est une mission de patrouille maritime ou de surveillance maritime.

9. Procédé selon la revendication 8, **caractérisé en ce que** ladite mission est une mission de sauvetage en mer.

10. Radar, **caractérisé en ce qu'**il est apte à mettre en oeuvre le procédé selon l'une quelconque des revendications précédentes.
